# EUROPEAN PATENT SPECIFICATION

(11) **EP 2 319 677 B1**
(45) Date of publication and mention of the grant of the patent: **10.02.2016**
(21) Application number: 11000330.8
(22) Date of filing: 25.07.2005
(51) Int. Cl.: B29C 45/50

(54) **Injection apparatus**
Injektionsvorrichtung
Dispositif d'injection

(30) Priority: 26.07.2004 JP 2004217298; 27.07.2004 JP 2004218622; 31.08.2004 JP 2004251580
(43) Date of publication of application: 11.05.2011
(62) Divisional of application: 05761805.0
(73) Proprietor: Sumitomo Heavy Industries, Ltd., Shinagawa-Ku Tokyo 141-6025 (JP)
(72) Inventor: Hiraga, Noritsugu, Chiba-shi Chiba 263-0001 (JP)
(74) Representative: Emde, Eric

(56) References cited:
- EP-A1- 0 967 064
- EP-A1- 1 004 421
- EP-A1- 1 674 233
- JP-A- 2002 036 282
- JP-A- 2003 211 512
- US-A1- 2001 038 868
- US-A1- 2003 082 268

## Description

### TECHNICAL FIELD

The present invention generally relates to an injection apparatus and, more particularly, to an injection apparatus that pressurizes and thereby injects resin by using an injection part such as a screw.

### BACKGROUND ART

In a conventional injection apparatus, resin is heated and thereby melted in a heating cylinder. The melted resin is injected at high pressure into a cavity of a molding apparatus. The resin is cooled and solidified in the cavity and becomes a molded product.

The molding apparatus includes a stationary mold and a movable mold. The movable mold is moved forward and backward relative to the stationary mold by using a clamping apparatus to close, clamp, and open the molding apparatus.

When clamping of the molding apparatus is completed, the conventional injection apparatus is caused to move forward. A nozzle of the heating cylinder is thereby caused to pass through a nozzle pass hole formed in a stationary platen and pressed onto a sprue bushing provided on the back of the stationary mold. Subsequently, the resin melted in the conventional injection apparatus is pressurized by a screw in the heating cylinder and injected from the nozzle. The injected melted-resin passes through the sprue bushing and a sprue, and fills the cavity formed between the stationary mold and the movable mold.

Also, there is an injection apparatus including a screw drive mechanism having a load detector that detects a load applied to a screw as the reaction force of melted resin. Based on the detected load, the disclosed injection apparatus controls an injection pressure (see, for example, JP-A-2000-52387 ).

FIG. 1 is a cross-sectional view of the injection apparatus disclosed in JP-A-2000-52387. As shown in FIG. 1, an injection apparatus frame includes a front cover 101, a center case 102, a rear cover 103, a front frame 104 provided between the front cover 101 and the center case 102, and a rear frame 105 provided between the center case 102 and the rear cover 103. A heating cylinder 1 is placed at the front end of the front cover 101, and a screw 2 is placed in the heating cylinder 1 so as to be able to rotate and move forward and backward.

A metering motor 110 is placed in the front part of the injection apparatus frame, and an injection motor 115 is placed in the rear part of the injection apparatus frame. A hollow first rotor shaft 111 is fitted in and fixed to a rotor of the metering motor 110. Both ends of the first rotor shaft 111 are held in the frame by bearings 188.

On the other hand, a hollow second rotor shaft 116 is fitted in and fixed to a rotor of the injection motor 115. Both ends of the second rotor shaft 116 are held in the frame by bearings 189.

Further, a first spline nut 120 is attached to the first rotor shaft 111. The spline nut 120 and a first spline shaft 121 are spline-coupled and thereby form a rotation transmission part. The first spline shaft 121 and the screw 2 are coupled by a coupling 3.

A second spline nut 124 is fixed to the inner surface of the center case 102, and a second spline shaft 123 is spline-coupled to the second spline nut 124. The second spline nut 124 functions as a rotation restricting part or a rotation stop for restricting rotation of the second spline shaft 123. Further, the first spline shaft 121 and the second spline shaft 123 are rotatably coupled via a bearing box 122.

A bearing retainer 127 is attached to the rear end of the second rotor shaft 116, and the bearing retainer 127 is rotatably held by the rear cover 103. A ball screw shaft 126 is inserted into and fixed to the inner hole of the bearing retainer 127.

A ball screw nut 125 is placed in the second rotor shaft 116 so as to be able to move forward and backward.

The ball screw nut 125 is brought into engagement with the ball screw shaft 126. The second spline shaft 123 is fixed to the ball screw nut 125. When the second rotor shaft 116 rotates, the ball screw shaft 126 rotates and, consequently, the ball screw nut 125 moves forward and backward.

A bearing 190 and a thrust bearing 180 are attached to the bearing retainer 127. A spacer 182 is positioned at a rear end of the thrust bearing 180. Additionally, a load cell press 184 is loosely fitted into the ball screw shaft 126. A load cell 183 is placed between the spacer 182 and the load cell press 184. The load cell 183 is attached to the rear cover 103 and detects a load applied to the screw 2 when the screw 2 moves forward and backward.

An encoder 187 is provided at the rear end of the ball screw shaft 126. The encoder 187 detects the rotation of the ball screw shaft 126 and thereby detects the position of the screw 2 in the axial direction.

In a metering process, the rotor of the metering motor 110 rotates, causes the screw 2 to rotate, and thereby melts resin. The melted resin is stored in the front end part of the heating cylinder 1. The screw 2 is rotated and moved backward (in the right hand direction in the figure) by the reaction force of the melted resin and metering is performed. The reaction force applied to the screw 2 is transmitted by the ball screw nut 125, the ball screw shaft 126, and the spacer 182, and is detected by the load cell 183. Feedback control of the back pressure is performed based on the reaction force detected by the load cell 183.

In an injection process, the rotor of the injection motor 115 rotates and thereby moves the screw 2 forward with the rotation of the screw 2 being restricted. As a result, the melted resin stored in the front end part of the heating cylinder 1 is injected into a mold (not shown). The filling pressure of the resin is detected by the load cell 183 and is monitored so as not to apply an excessive pressure to the screw 2.

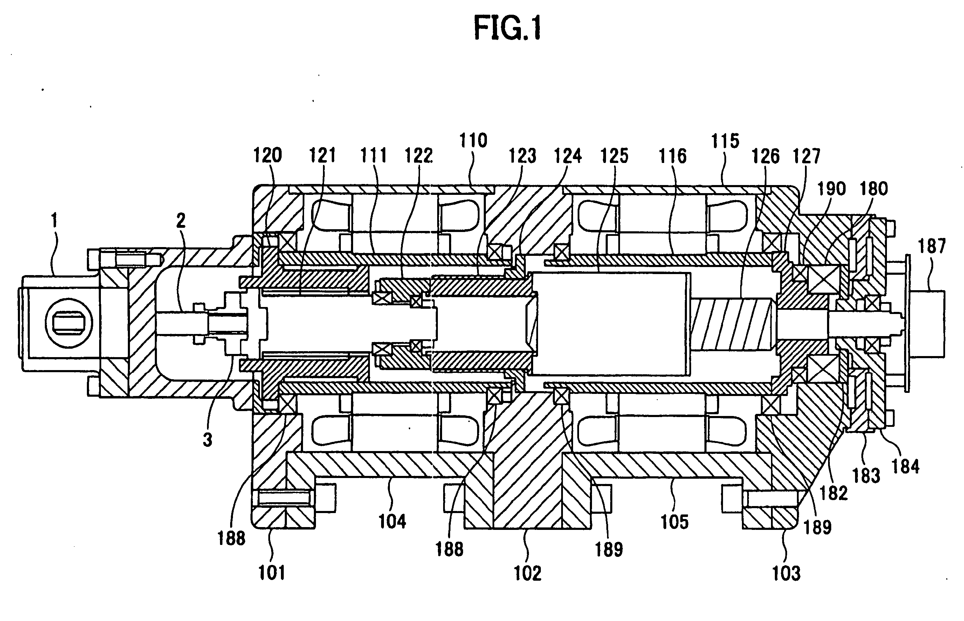

In the injection apparatus shown in FIG. 1, the load applied to the screw 2 is transmitted via the first spline shaft 121, the bearing box 122, the second spline shaft 123, the ball screw nut 125, the ball screw shaft 126, the bearing retainer 127, the bearing 180, and the spacer 182 to the load-cell 183. The transmitted load strains a strain part of the load cell 183. Based on this strain, the load cell 183 detects the load being applied to the screw 2. Accordingly, when a load is applied to the screw 2, the spacer 182, the bearings 180 and 190, the bearing retainer 127, and the second rotor shaft 116 are displaced together with the ball screw shaft 126 in a direction (the right hand direction in the figure) opposite to that of the screw 2 as much as the load cell 183 is strained.

The outer circumferential surfaces of the bearings 180 and 190 slide relative to the center case 102 and the rear cover 103 to allow this displacement.

Since this sliding causes sliding resistance, the load detected by the load cell 183 becomes the.sum of the load applied to the screw 2 and the sliding resistance. This makes it difficult to accurately detect only the load applied to the screw 2. Additionally, the sliding resistance may vary with each molding cycle. This especially makes it difficult to accurately control a metering process where the load applied is low.

EP-A-1 004 421 A1 discloses an injection molding machine and was used as a basis for the preamble of claim 1. The injection molding machine comprises a cylinder member; an injection member disposed within the cylinder member such that the injection member can advance and retract; an injection motor; and a transmission shaft which is connected to the injection member such that the transmission shaft can rotate relative to the injection member. The transmission shaft has a rotation transmission portion, to which rotation of the injection motor is transmitted, as well as a motion conversion portion for converting rotational motion to linear motion. The injection motor and the transmission shaft are disposed on the same axis, and the transmission shaft is advanced and retracted inside the rotor of the injection motor. In this case, since rotation of the injection motor is transmitted directly to the transmission shaft without intervention of a speed reduction mechanism, a pulley, and the like, mechanical efficiency can be improved, and inertia can be decreased. Further, the time required for changeover from the injection stage to the pressure holding stage is shortened. Since the transmission shaft is advanced and retracted inside the rotor of the injection motor, the injection molding machine can be reduced in axial length.

EP 1 674 233 A1 forms part of the prior art under Art. 54 (3) EPC and discloses a motor-driven injection molding machine including a member-to-be-driven; a motor for operating the member-to-be-driven; and a motion direction conversion portion disposed between the motor and the member-to-be-driven and adapted to convert to a linear motion a rotational motion of rotation generated by driving the motor.

It is a general object of the present invention to provide an improved and useful injection apparatus in which the above-mentioned problems are solved.

A more specific object of the present invention is to provide an injection apparatus that can accurately detect a load applied to an injection part without the influence of sliding resistance resulting from the mounting structure of a load detector.

Another object of the present invention is to provide an injection apparatus that makes it possible to easily align the center of an injection part.

To achieve the above-mentioned objects, the present invention provides an injection apparatus as set forth in claim 1. Preferred embodiments of the present invention may be gathered from the dependent claims. In particular, in accordance with one preferred embodiment of the present invention, a strain unit, which is slightly strained when a load is detected, is attached to a thrust bearing, which receives a back pressure load of an injection part such as a screw. Therefore, even when a strain unit such as a load cell is strained, no part of the exemplary injection apparatus slides, but only the entire load transmission mechanism including the thrust bearing moves slightly. Such a structure makes it possible to accurately measure a load applied to the injection part without the influence of sliding resistance that varies with each molding cycle. Especially, such a structure makes it possible to improve the accuracy of detecting a low load in a metering process.

### BRIEF DESCRIPTION OF DRAWINGS

FIG. 1 is a cross-sectional view of a conventional injection apparatus;
FIG. 2 is a cross-sectional view of an exemplary injection apparatus according to a first embodiment of the present invention;
FIG. 3 is a cross-sectional view of an injection drive unit shown in FIG. 1;
FIG. 4 is a cross-sectional view of a variation of the injection drive unit shown in FIG. 2;
FIG. 5 is a plan view of an entire structure of an exemplary injection apparatus according to a second embodiment of the present invention;
FIG. 6 is a cross-sectional view of the exemplary injection apparatus shown in FIG. 5 taken along line VI-VI;
FIG. 7 is a cross-sectional view of an injection drive unit of an exemplary injection apparatus according to a third embodiment of the present invention; and
FIG. 8 is a cross-sectional view of a variation of the injection drive unit shown in FIG. 7.

### BEST MODE FOR CARRYING OUT THE INVENTION

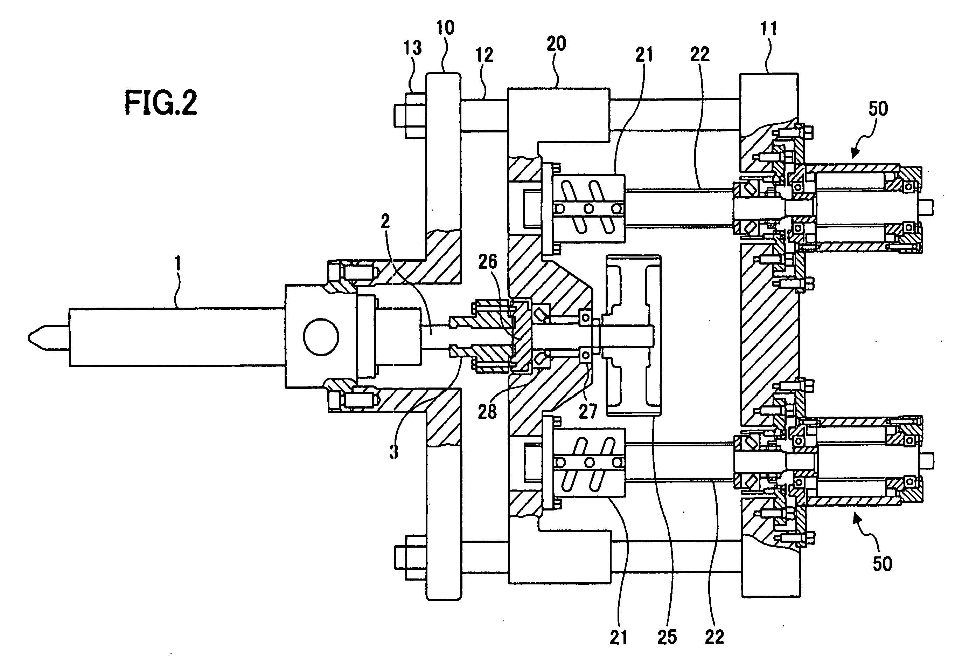

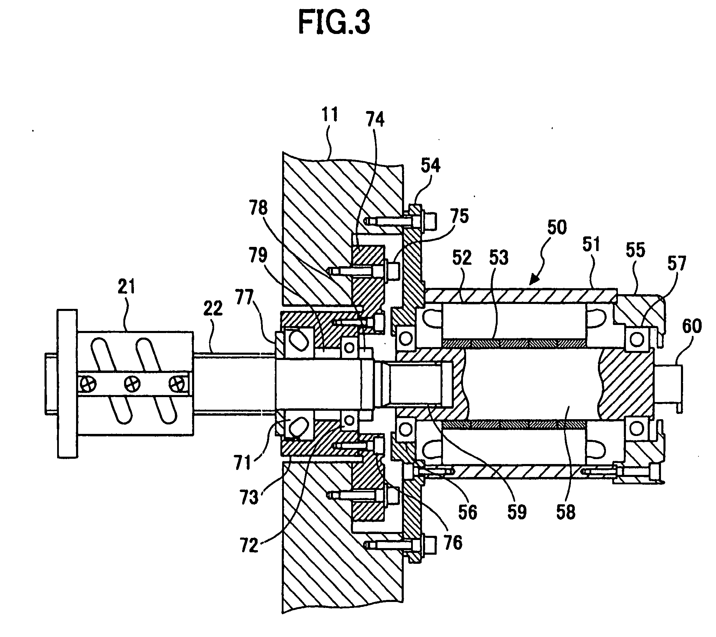

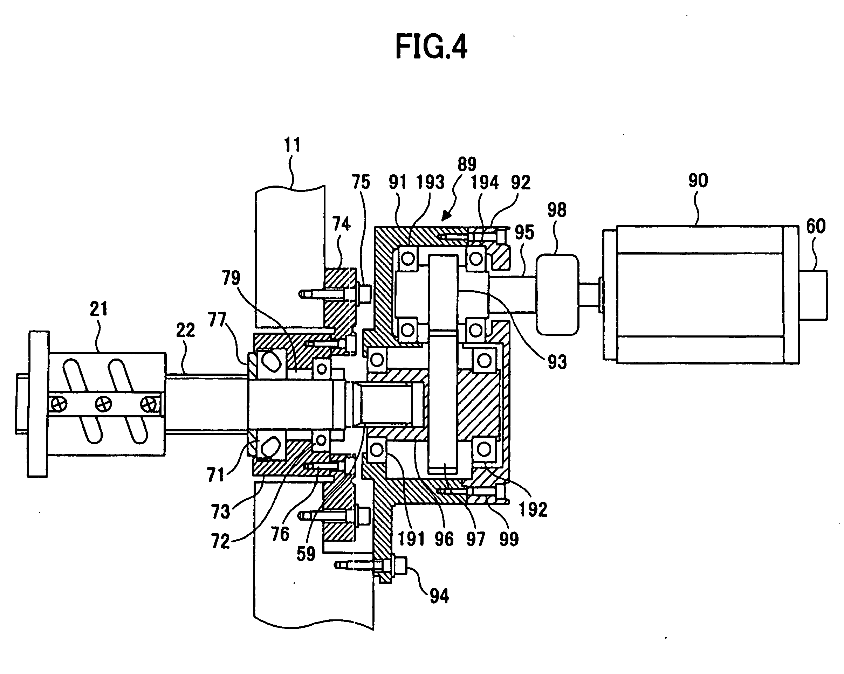

Preferred embodiments of the present invention are described below with reference to the accompanying drawings. FIG. 2 is a cross-sectional view of an exemplary injection apparatus according to a first embodiment of the present invention. FIG. 3 is a cross-sectional view of an injection drive unit shown in FIG. 2. FIG. 4 is a cross-sectional view of a variation of the injection drive unit shown in FIG. 2.

As shown in FIG. 2, an injection apparatus frame of the exemplary injection apparatus includes an injection front support 10, an injection rear support 11 that is a stationary support part for the injection drive units 50, guide bars 12 provided between the injection front support 10 and the injection rear support 11, and guide bar nuts 13 that fix the guide bars 12 to the injection front support 10. A heating cylinder 1 is provided at the front end (in the left hand side of the figure) of the injection front support 10. A screw 2 used as an injection part is provided in the heating cylinder 1 so as to be able to rotate and move forward and backward.

The guide bars 12 slidably support a pressure plate 20 that moves forward and backward in the axial direction along with the screw 2. Ball screw nuts 21 are fixed to the pressure plate 20 in positions that are at the same distance from the axis of the screw 2. Ball screw shafts 22 are brought into engagement with the ball screw nuts 21. Each pair of the ball screw shafts 22 and the ball screw nuts 21 forms a motion conversion mechanism. Each of the injection drive units 50 is fixed to the injection rear support 11 so that its axis is aligned with the axis of the corresponding one of the ball screw shafts 22. With this structure, rotation is transmitted with no mediation of a speed reducing mechanism.

When the ball screw shafts 22 are rotated by the injection drive units 50, the rotational motion is converted into linear motion by the ball screw shafts 22 and the ball screw nuts 21. The ball screw nuts 21 are fixed to the pressure plate 20 that is slidably supported by the guide bars 12. Therefore, the rotational motion generated by the injection drive units 50 is converted into linear motion of the pressure plate 20.

Also, a rotation shaft 26 is rotatably held at both ends by a thrust bearing 28 and a bearing 27 and is aligned with the central axis of the pressure plate 20. One end of the rotation shaft 26 is coupled to the screw 2 by the coupling 3, and the other end is fixed to a pulley 25 that transmits the rotation of a screw rotation drive motor (not shown) provided on the pressure plate 20.

As shown in FIG. 3, each of the injection drive unit 50 includes a motor flange 54, a motor housing 51 fixed to the motor flange 54, and a motor rear flange 55 fixed to the motor housing 51. Also, a stator 52 and a rotor 53 are provided in the injection drive unit 50. A rotation shaft 58 is inserted into and fixed to the inner hole of the rotor 53. Corresponding ends of the rotation shaft 58 are rotatably held by bearings 56 and 57. The bearing 56 is held by the motor flange 54 and the bearing 57 is held by the motor rear flange 55.

The ball screw shaft 22 has a bearing fixing part with a diameter smaller than that of a screw part. Fine screw threads for engaging a fastening nut 78 are formed at the rear of the bearing fixing part of the ball screw shaft 22. A bearing press 77 is provided at the step between the screw part and the bearing fixing part of the ball screw shaft 22. The inner ring of a thrust bearing 71 is brought into contact with the bearing press 77. The outer ring of the thrust bearing 71 is brought into contact with a side of a protruding part of a bearing holder 73 that is used as a lubrication retaining part. The outer ring of a bearing 72 is brought into contact with the other side of the protruding part of the bearing holder 73. The inner ring of the bearing 72 is brought into contact with the fastening nut 78 screwed onto the ball screw shaft 22. The thrust bearing 71 and the bearing 72 are preloaded by the fastening nut 78.

Thus, the bearing press 77, the thrust bearing 71, the bearing holder 73, and the fastening nut 78 form a load transmission mechanism. The load transmission mechanism also functions as a rotation allowing unit that rotatably supports the ball screw shaft 22 with respect to the injection rear support 11.

Also, the thrust bearing 71, the bearing 72, and the bearing holder 73 form a lubrication chamber 79. A lubricant is supplied to and retained in the lubrication chamber 79. The bearing holder 73 prevents scattering of the supplied lubricant even when centrifugal force caused by the rotation of the ball screw shaft 22 is applied to the supplied lubricant. Therefore, the lubricant is stably retained in the lubrication chamber 79.

A load cell 74 is a strain unit that functions as a load detector and is fixed by fixing bolts 75 to the injection rear support 11. The load cell 74 used as the strain unit has a toric shape with an opening in the center. The outer circumferential portion of the load cell 74 functions as a fixing part, the inner circumferential portion functions as a pressure receiving part, and the center part functions as a strain part. With a strain detector provided in the strain part, the load cell 74 functions as a load detector. The pressure receiving part that is the inner circumferential portion of the load cell 74 is fixed by fixing bolts 76 to the bearing holder 73. The fixing part that is the outer circumferential portion of the load cell 74 is fixed by the fixing bolts 75 to the injection rear support 11. Therefore, the load cell 74 is attachable to and detachable from the exemplary injection apparatus independent of the ball screw shaft 22 and is able to accurately detect the load applied to the screw 2.

Also, since the pressure receiving part that is the inner circumferential portion of the load cell 74 is fixed to the bearing holder 73 holding the thrust bearing 71, no sliding resistance is generated between the thrust bearing 71 and the injection rear support 11. This structure enables the load cell 74 to accurately detect the load applied to the screw 2.

Further, since the pressure receiving part in the inner circumferential part of the load cell 74 is fixed to the bearing holder 73, the load cell 74 is not influenced by the preload applied by the fastening nut 78. This structure enables the load cell 74 to accurately detect the load applied to the screw 2.

A splined part is formed at an end of the ball screw shaft 22 which end is closer to the injection drive unit 50 and another splined part is formed in the rotation shaft 58 of the injection drive unit 50. These splined parts function together as a rotation transmission part 59. Since the rotation transmission part 59 has a spline structure, it also functions as a movement allowing part that allows the ball screw shaft 22 to move in the axial direction when the strain part of the load cell 74 is strained in the axial direction. More specifically, male splines are formed at an end of the ball screw shaft 22 which end is closer to the injection drive unit 50 and female splines are formed on the inner surface of a recess formed at an end of the rotation shaft 58 which end is closer to the injection rear support 11. With the splines, the ball screw shaft 22 and the rotation shaft 58 are spline-coupled.

An encoder 60 is fixed to an end (right hand side in the figure) of the rotation shaft 58. The encoder 60 detects the rotation of the rotation shaft 58 and thereby detects the position of the screw 2 in the axial direction.

Although a spline structure is used for the rotation transmission part 59, a sliding key structure that transmits rotation and allows movement in the axial direction may be used.

As described above, the injection drive unit 50 can be independently attached to and detached from the exemplary injection apparatus. This structure makes it easier to fabricate and maintain the exemplary injection apparatus.

Also, the movement allowing part allows the ball screw shaft 22 and the bearing holder 73 to move along the axis in a direction opposite to that of the injection rear support 11. This structure prevents the rotor 53 from being displaced when the ball screw shaft 22 is moved and thereby enables the load cell 74 to accurately detect the load applied to the screw 2.

Further, according to this embodiment, the ball screw shaft 22 and the rotation shaft 58 are not joined but allowed to move in the axial direction. Therefore, there is no possibility of a seize-up at a joint between the ball screw shaft 22 and the rotation shaft 58.

The working of the exemplary injection apparatus according to the first embodiment is described below.

In a metering process, a motor (not shown) used as a screw rotation drive unit and attached to the pressure plate 20 is driven to rotate the pulley 25. As a result, the screw 2 rotates and thereby melts and plasticizes resin. The melted resin is stored in the front end part of the heating cylinder 1. Because of the reaction force of the melted resin, the screw 2 rotates and moves backward toward the injection drive unit 50 (in the right hand direction in the figure). The reaction force of the melted resin works as a back pressure on the screw 2. The back pressure load is transmitted via the pressure plate 20 to the ball screw shaft 22. The back pressure load transmitted to the ball screw shaft 22 is then transmitted via the thrust bearing 71 and the bearing holder 73 to the load cell 74. The strain part of the load cell 74 is strained according to the size of the back pressure load. As described above, the back pressure load is transmitted via the pressure plate 20, the ball screw shaft 22, the thrust bearing 71, and the bearing holder 73 to the load cell 74. In other words, the pressure plate 20, the ball screw shaft 22, the thrust bearing 71, and the bearing holder 73 form a load transmission mechanism for transmitting a back pressure load.

The ball screw shaft 22 is spline-coupled to the injection drive unit 50 at the rotation transmission part 59. Therefore, when a back pressure load is applied, the ball screw shaft 22 moves smoothly backward in a direction opposite to that of the injection rear support 11.

In the exemplary injection apparatus, the rotation transmission part 59 having a spline structure is the only sliding part. Such a configuration makes it possible to improve the detection accuracy of the load cell 74. In other words, the exemplary injection apparatus can stably meter melted resin in each shot and therefore can stably produce molded products.

In an injection process succeeding the metering process, the injection drive unit 50 is driven with the rotation of the screw 2 being restricted. As a result, the ball screw shaft 22 is rotated. The rotation of the ball screw shaft 22 causes the pressure plate 20 to move forward (in the left hand direction in the figure) and thereby causes the melted resin stored in the front end part of the heating cylinder 1 to be injected into a mold (not shown). As described above, the ball screw shaft 22 is spline-coupled to the injection drive unit 50 at the rotation transmission part 59. Therefore, as in the metering process, when an injection pressure is applied to the screw 2 and a back pressure is applied to the ball screw shaft 22, the ball screw shaft 22 can move smoothly backward in a direction opposite to that of the injection rear support 11. With the above mechanism, the load cell 74 can accurately detect the injection pressure. This, in turn, makes it possible to reduce molding defects such as burrs and sinks and to stably produce molded products.

FIG. 4 is a cross-sectional view of another exemplary injection drive unit having a speed reducer 89 between an injection motor 90 and the ball screw shaft 22. As shown in FIG. 4, a speed reducer frame includes a housing 91 fixed to the injection rear support 11 and a housing cover 92 fixed by fixing bolts 99 to the housing 91. The housing 91 is fixed by fixing bolts 94 to the injection rear support 11.

Also, a second gear shaft 96 having a splined part is provided in the speed reducer frame. The splined part of the second gear shaft 96 is slidably coupled to the splined part formed at one end of the ball screw shaft 22. The second gear shaft 96 is rotatably held by a bearing 191 and a bearing 192, which are provided in the housing 91 and the housing cover 92, so as to allow strain of the ball screw shaft 22 in the axial direction. A gear wheel 97 is attached to the second gear shaft 96.

Also, a first gear shaft 95 is rotatably held by a bearing 193 and a bearing 194 that are provided in the housing 91 and the housing cover 92. A pinion 93 that engages the gear wheel 97 is formed in the middle of the first gear shaft 95. One end of the first gear shaft 95 is coupled via a coupling 98 to the injection motor 90 attached to the injection rear support 11. The encoder 60 is attached to an end of the injection motor 90.

In the exemplary injection apparatus according to the first embodiment of the present invention, a load applied to the screw 2 is transmitted via the rotation shaft 26, the pressure plate 20, the ball screw nut 21, the ball screw shaft 22, and the bearing holder 73 to the load cell 74. The strain part of the load cell 74 is strained by the transmitted load and the load being applied to the screw 2 is detected based on the amount of strain.

Meanwhile, when the strain part of the load cell 74 is strained, the rotation shaft 26 and the bearing holder 73 are displaced according to the amount of strain. Since one end of the ball screw shaft 22 and one end of the rotation shaft 58 of the injection drive unit 50 are spline-coupled, the displacement of the ball screw shaft 22 is allowed by the spline-coupled part. Accordingly, the displacement of the ball screw shaft 22 does not affect the injection drive unit 50. Also, since the bearings do not slide, unstable sliding resistance is not generated.

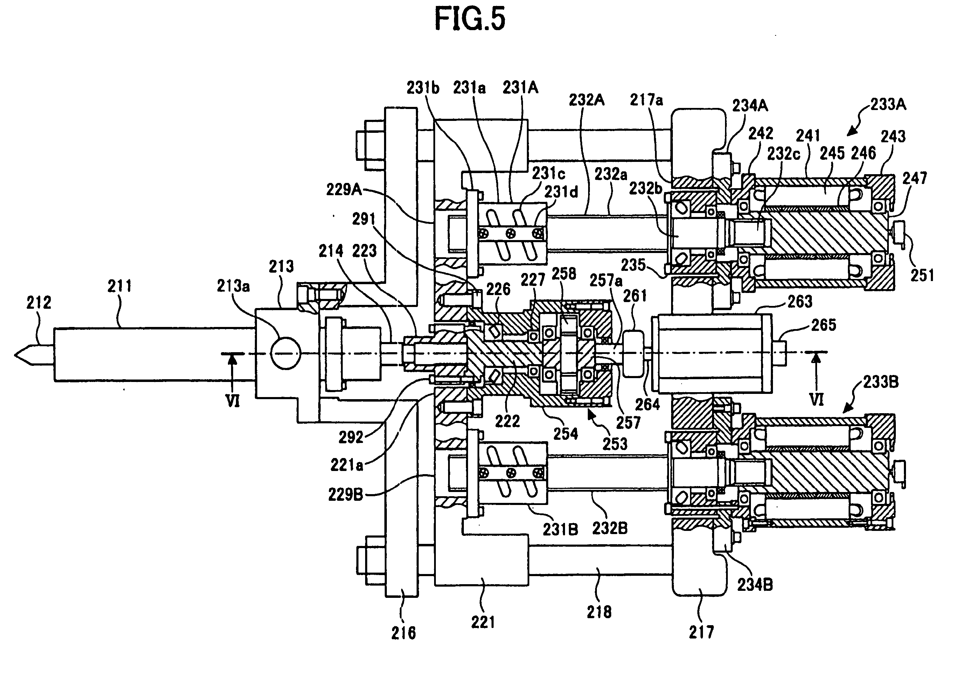

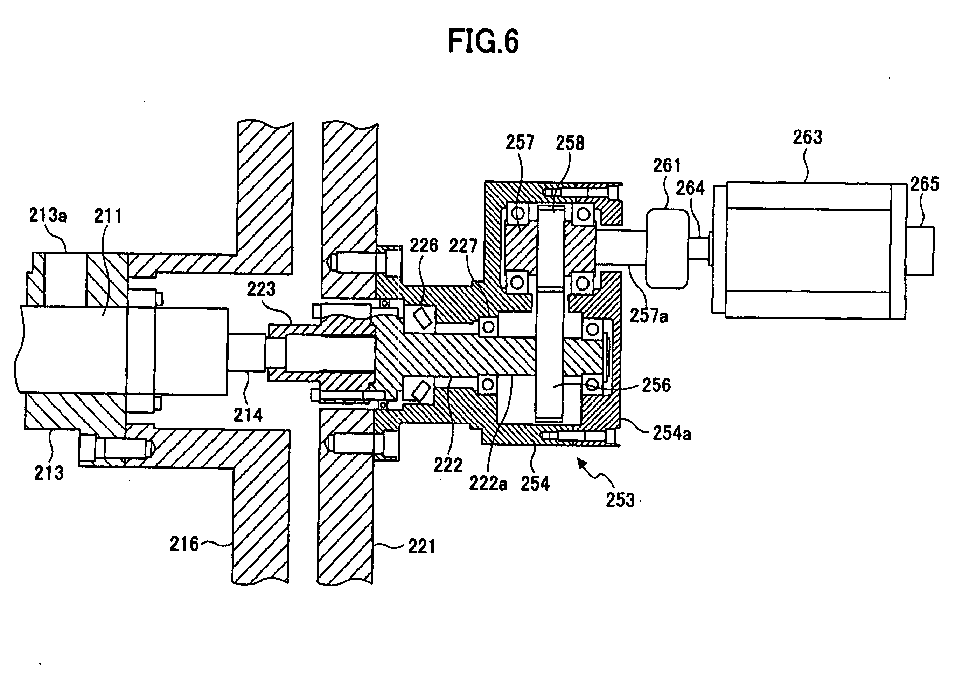

A second embodiment of the present invention is described below with reference to FIGs. 5 and 6.

FIG. 5 is a plan view of an entire structure of an exemplary injection apparatus according to the second embodiment of the present invention. FIG. 6 is a cross-sectional view of the exemplary injection apparatus shown in FIG. 5 taken along line VI-VI.

An injection apparatus 210 shown in FIG. 5 is an injection apparatus used in an injection molding machine and is attached to an injection apparatus frame not shown in the figure. A clamping apparatus (not shown) including a molding apparatus made up of a stationary mold and a movable mold is positioned in front of the injection apparatus 210 (in the left hand side of FIG. 1). The injection apparatus 210 is configured so as to be able to move toward and away from the clamping apparatus.

A heating cylinder 211 is a cylindrical part including a heating device (not shown) such as an electric heater or a hot water jacket. An injection nozzle 212 is attached to the front end of the heating cylinder 211. A cooling jacket 213 for cooling a part of the heating cylinder 211 is attached to the heating cylinder 211 in a position near its rear end. Raw resin such as resin pellets is put into the heating cylinder 211 through a material input hole 213a formed in the cooling jacket 213. A screw 214 used as an injection part is held in the heating cylinder 211 so as to be able to rotate and move in the axial direction. The rear end part of the screw 214 protrudes from the rear end of the heating cylinder 211 (in the right hand direction in the figure).

A front flange part 216 for supporting the heating cylinder 211 is fixed by fastening parts such as bolts to the cooling jacket 213. A rear flange part 217 for supporting injection motors is positioned posterior to the front flange part 216 (in the right hand direction in the figure). The front flange part 216 and the rear flange part 217 are attached to the injection apparatus frame and function as stationary supporting parts for the heating cylinder 211. Meanwhile, the front flange part 216 and the rear flange part 217 are joined by the guide rods 218. The front and rear ends of the guide rods 218 are, for example, screwed to the front flange part 216 and the rear flange part 217. The number of the guide rods 218 may be one or more and is not limited to a specific number. In this embodiment, four guide rods 218 are provided.

A pressure plate 221 is provided between the front flange part 216 and the rear flange part 217 and configured to be able to move in the axial direction of the screw 214 and not to be able to move in other directions. The pressure plate 221 is a movable plate and functions as a screw supporting part. The pressure plate 221 is able to move forward and backward (in the left hand and right hand directions in the figure) along the guide rods 218 together with the screw 214.

A through hole 221a for inserting the rear end part of the screw 214 is formed in the pressure plate 221 at a position corresponding to the screw 214. A speed reducer frame 254 of a speed reducer 253 used as a transmission unit is fixed by bolts 291 to the rear side (the right hand side in the figure) of the pressure plate 221 at a position corresponding to the through hole 221a. The bolts 291 are inserted into the through holes formed in the flange of the speed reducer frame 254. The inner diameter of the through holes is slightly larger than the outer diameter of the bolts 291. This makes it possible, when fixing the speed reducer frame 254 to the pressure plate 221, to adjust the position of the speed reducer frame 254 in its width direction or in a direction perpendicular to the axis of the screw 214 before tightening the bolts 291. After the adjustment, the speed reducer frame 254 is firmly fixed to the pressure plate 221 by tightening the bolts 291. As a result, the position of the screw 214 is fixed with respect to the pressure plate 221.

The speed reducer 253 includes a connecting shaft 222 used as an output rotation shaft. The front end of the connecting shaft 222 is connected to the rear end of the screw 214 and held in the speed reducer frame 254. The connecting shaft 222 is joined by a joint part 223 and bolts 292 to the rear end of the screw 214. The rear end part of the screw 214 is spline-coupled to the joint part 223 and the position of the screw 214 is thereby fixed. The joint part 223 is inserted into the through hole 221a. In other words, the rear end part of the screw 214 coupled to the connecting shaft 222 is inserted into the through hole 221a. The connecting shaft 222 is held by a thrust bearing 226 and a thrust bearing 227 so as to be able to rotate and not to be able to move in the axial direction with respect to the speed reducer frame 254.

As described above, the screw 214 and the connecting shaft 222 are joined so as not to be able to rotate and move in the axial direction with respect to each other. Also, the connecting shaft 222 is held in the speed reducer frame 254 so as to be able to rotate and not to be able to move in the axial direction. With this structure, a thrust load applied to the screw 214 is transmitted by the speed reducer frame 254 to the pressure plate 221. On the other hand, this structure makes it possible to transmit a thrust load from the pressure plate 221 to the screw 214. In other words, the speed reducer 253 used as a transmission unit allows the rotation of the screw 214. The speed reducer frame 254 also functions as a load receiving part for receiving a thrust load from the screw 214. Also, the connecting shaft 222 functions as a screw rotation drive transmission part for transmitting the rotation of a metering motor 263 described later to the screw 214. In other words, the transmission unit includes the load receiving part and the screw rotation drive transmission part.

As shown in FIG. 6, a drive gear shaft 257 is provided in the speed reducer frame 254 in parallel with the connecting shaft 222. A drive gear 258 having a smaller diameter and attached to the drive gear shaft 257 and a driven gear 256 having a larger diameter and attached to a rear end part 222a of the connecting shaft 222 engage each other and form a speed reducing mechanism. The drive gear shaft 257 is held by radial bearings in the speed reducer frame 254 so as to be able to rotate and not to be able to move in the axial direction. The rear end of the connecting shaft 222 is also held by a radial bearing in the speed reducer frame 254.

The rear end part (right end part in the figure) or a motor connecting part 257a of the drive gear shaft 257 protrudes backward from the speed reducer frame 254 and is coupled by a coupling 261 to the front end (left end) of a metering motor shaft 264 of the metering motor 263 that is a screw rotating motor used as a driving source for metering. As the metering motor 263, any motor, for example, a servomotor, may be used as long as its rotation angle, rotational speed, and rotation direction are controllable. A rotation meter 265 such as a rotary encoder for measuring the rotational speed of the metering motor shaft 264 is attached to the rear end of the metering motor shaft 264. The drive gear shaft 257 and the metering motor shaft 264 are coupled so as not to be able to rotate with respect to each other and not to be able to move in the axial direction. In this embodiment, the metering motor 263 is attached to the pressure plate 221 via the speed reducer frame 254. However, when there is a possibility that the connecting shaft 222 can be decentered by the weight of the metering motor 263, the metering motor 263 may be attached to the pressure plate 221 by using an attaching part (not shown).

When the metering motor 263 is driven and the metering motor shaft 264 is rotated, the rotation is transmitted by the drive gear 258 and the driven gear 256 to the connecting shaft 222. As a result, the screw 214 rotates. The speed reducer 253 may include another speed reducing mechanism made up of other drive and driven gears in addition to the speed reducing mechanism made up of the drive gear 258 and the driven gear 256 so as to reduce the speed stepwise. Also, the speed reducer 253 may include a different speed reducing mechanism made up of a timing belt pulley and a timing belt instead of the speed reducing mechanism made up of the drive gear 258 and the driven gear 256. Using a belt in the speed reducing mechanism makes it possible to remove, for example, the load receiving part from the pressure plate 221 with the metering motor 263 left attached to the pressure plate 221. Meanwhile, the metering motor 263 is configured to move forward and backward together with the pressure plate 221. Therefore, the rotation of the metering motor shaft 264 is accurately transmitted to the screw 214 even when the pressure plate 221 moves forward or backward.

An injection motor 233A and an injection motor 233B used as driving sources or driving parts for injection are attached to the rear flange part 217. The number of injection motors may be one or more and is not limited to a specific number. In this embodiment, the injection motor 233A and the injection motor 233B are provided. The injection motor 233A and the injection motor 233B are attached to the rear flange part 217 via load cells 234A and 234B used as load detectors for measuring thrust loads.

A ball screw nut 231A and a ball screw nut 231B used as ball screw mechanisms are fixed to the pressure plate 221 in positions corresponding to the injection motor 233A and the injection motor 233B, respectively. Ball screw shafts 232A and 232B are brought into engagement with the ball screw nut 231A and the ball screw nut 231B, respectively. The ball screw shafts 232A and 232B are driven rotation shafts that are rotated by the injection motor 233A and the injection motor 233B. Each one of the pairs of the ball screw nut 231A and the ball screw shaft 232A and the ball screw nut 231B and the ball screw shaft 232B forms a ball screw mechanism that functions as a motion direction conversion mechanism for converting rotational motion into linear motion. A pass-through hole 229A and a pass-through hole 229B for inserting the front ends of the ball screw shaft 232A and the ball screw shaft 232B are formed through the pressure plate 221 at positions where the ball screw nut 231A and the ball screw nut 231B are attached. As described above, each of the injection motors 233A and 233B used as driving parts is aligned in the same straight line with the corresponding one of the pairs of the ball screw nut 231A and the ball screw shaft 232A and the ball screw nut 231B and the ball screw shaft 232B used as motion direction conversion parts.

The number of ball screw nuts, ball screw shafts, or pass-through holes corresponds to the number of injection motors. The number is one or more and is not limited to a specific number. In this embodiment, the ball screw nuts 231A and 231B, the ball screw shafts 232A and 232B, and the pass-through holes 229A and 229B are provided. Hereafter, for descriptive purpose, the injection motors 233A and 233B, the ball screw nuts 231A and 232B, the ball screw shafts 232A and 232B, the pass-through holes 229A and 229B, and the load cells 234A and 234B are referred to as an injection motor 233, a ball screw nut 231, a ball screw shaft 232, a pass-through hole 229, and a load cell 234, respectively.

In this embodiment, the injection motor 233A and the injection motor 233B are fixed by fastening parts such as bolts to the rear flange part 217 so as not to be able to rotate and move in the axial direction. Also, the ball screw nut 231A and the ball screw nut 231B are fixed by fastening parts such as bolts to the pressure plate 221 so as not to be able to rotate and move in the axial direction. The pressure plate 221 and the rear flange part 217 are configured so as to be able to move relative to each other in the axial direction of the injection motor 233A, the injection motor 233B, the ball screw nut 231A, and the ball screw nut 231B and not to be able to move in other directions. With such a configuration, the ball screw nut 231A and the ball screw nut 231B can be moved forward and backward by driving the injection motors 233A and 233B and thereby rotating the ball screw shafts 232A and 232B. The forward and backward movement of the ball screw nuts 231A and 231B causes the pressure plate 221 and the screw 214 to move forward and backward. The injection motors 233A and 233B are configured to rotate synchronously and thereby to move the ball screw nuts 231A and 231B the same amount at the same time in the same direction.

The ball screw shaft 232 includes a screw part 232a where a helical ball screw groove is formed, a bearing part 232b to which thrust bearings are attached, and a connecting part 232c where spline grooves are formed along the axial direction. A through hole 217a for putting through the ball screw shaft 232 is formed in the rear flange part 217. A bearing holder 235 is inserted into the through hole 217a. The bearing holder 235 is a load transmission part and holds the bearing part 232b formed in the latter half of the ball screw shaft 232 so that the ball screw shaft 232 is able to rotate and is not able to move in the axial direction. The bearing holder 235 has a substantially cylindrical shape. A first thrust bearing and a second thrust bearing in the bearing holder 235 hold the bearing part 232b passing through the bearing holder 235.

The injection motor 233 used as a driving part includes a motor frame 241 having a substantially cylindrical shape, a front end plate 242, and a rear end plate 243. The front end plate 242 and the rear end plate 243 are fixed by fastening parts such as bolts to the front end side and the rear end side of the motor frame 241, respectively. A stator 245 made of a coil is fixed to the inner surface of the motor frame 241. A motor shaft 247 used as a drive rotation shaft is rotatably held in the injection motor 233 and a magnet 246 used as a rotor is attached onto the outer surface of the motor shaft 247 so as to face the stator 245.

The motor shaft 247 is held by radial bearings fixed to the front end plate 242 and the rear end plate 243 so as to be able to rotate and not to be able to move in the axial direction. A rotation meter 251 such as a rotary encoder for measuring the rotational speed of the motor shaft 247 is attached to the rear end of the motor shaft 247. A recess used as a connecting part is formed in the front end part of the motor shaft 247. Spline grooves are formed on the inner surface of the recess along the axial direction. The connecting part 232c formed at the rear end of the ball screw shaft 232 is inserted into and thereby spline-coupled to the connecting part.

The bearing holder 235 and the injection motor 233 are attached to the rear flange part 217 via the load cell 234 used as a load detector. The load cell 234 has a substantially toric shape and its fixing part near the outer circumference is fixed by fastening parts such as bolts to the rear side (the right hand side in FIG. 1) of the rear flange part 217. The pressure receiving part near the inner circumference of the load cell 234 is sandwiched between and held by the bearing holder 235 and the front end plate 242. Preferably, the bearing holder 235, the pressure receiving part, and the front end plate 242 are integrally fastened by fastening parts such as bolts that penetrate through these three parts.

The working of the injection apparatus 210 with the above configuration is described below.

First, the working of the injection apparatus 210 in a metering process is described. In a metering process, the screw 214 is rotated to melt raw resin put into the heating cylinder 211 through the material input hole 213a formed in the cooling jacket 213. A specific amount of melted resin is stored in the front part of the screw 214.

When the metering motor 263 is driven and the metering motor shaft 264 is rotated, the rotation is transmitted by the coupling 261, the drive gear shaft 257, the drive gear 258, and the driven gear 256 to the connecting shaft 222. As a result, the connecting shaft 222 rotates. The rotation of the connecting shaft 222 is transmitted by the joint part 223 to the screw 214. As a result, the screw 214 rotates in the heating cylinder 211 and thereby melts and feeds forward the raw resin. The melted resin is stored in the front part of the screw 214.

In the metering process, a back pressure is generated when the resin is moved forward and the generated back pressure creates a thrust load that pushes back the screw 214. The thrust load is transmitted by the joint part 223, the connecting shaft 222, and the thrust bearing 226 to the speed reducer frame 254 of the speed reducer 253. Then, the thrust load is transmitted to the pressure plate 221 to which the speed reducer frame 254 is attached. Next, the thrust load is transmitted by the ball screw nut 231 attached to the pressure plate 221 to the ball screw shaft 232. Further, the thrust load is transmitted by the ball screw shaft 232 and the bearing holder 235 to the pressure receiving part of the load cell 234. The transmitted thrust load strains the strain part of the load cell 234. The thrust load indicating the amount of back pressure can be measured by measuring the amount of the strain with a strain meter.

The connecting part 232c of the ball screw shaft 232 is coupled to the connecting part of the motor shaft 247 of the injection motor 233 so as not to be able to rotate and so as to be able to move in the axial direction. Therefore, the thrust load is not transmitted to the motor shaft 247 and is not received by the injection motor 233. Such a structure makes it possible to accurately measure the thrust load indicating the amount of the back pressure by measuring the amount of strain of the strain part of the load cell 234 without the influence of the injection motor 233.

Meanwhile, since the amount of back pressure influences the quality of molded products, it is necessary to control the amount of the back pressure so that it becomes an appropriate level. The appropriate level of the back pressure changes depending on the type of the resin and molding conditions. To adapt to the changes, after measuring a thrust load indicating the amount of back pressure based on an output signal received from the strain meter, a control unit of the injection apparatus drives the injection motor 233 to cause the screw 214 to gradually move backward so that the thrust load or the back pressure becomes an appropriate level that is predetermined based on the type of resin and molding conditions. When the injection motor 233 is driven, the motor shaft 247 is rotated. The rotation of the motor shaft 247 is transmitted to the ball screw shaft 232, causing the ball screw shaft 232 to rotate with respect to the ball screw nut 231. The rotational motion is converted into linear motion and therefore causes the ball screw nut 231, the pressure plate 221, and the screw 214 to move backward.

Meanwhile, when the injection motor 233 is driven and the motor shaft 247 is rotated, the motor shaft 247 ripples or generates minute vibration in the axial direction. Since the ball screw shaft 232 is coupled to the motor shaft 247 so as to be able to move in the axial direction, the ripple is not transmitted to the ball screw shaft 232. In other words, the ripple is not transmitted to the pressure receiving part of the load cell 234 and therefore does not affect the measurement of the thrust load. Such a structure makes it possible to accurately measure the thrust load indicating the amount of back pressure without the influence of the injection motor 233 even when it is being driven. In other words, such a structure makes it possible to accurately measure a back pressure and thereby to accurately control the amount of back pressure so that it becomes an appropriate level.

Next, the working of the injection apparatus 210 in an injection process is described.

After a specific amount of melted resin is stored in the front part of the screw 214 in the metering process and the molding apparatus is clamped by a clamping apparatus (not shown), the injection apparatus 210 is moved forward. Then, the front end of the injection nozzle 212 attached to the heating cylinder 211 is caused to pass through a nozzle pass hole formed in a stationary platen and pressed onto a sprue bushing provided on the back of a stationary mold. The injection motor 233 is driven to rotate the motor shaft 247. The rotation of the motor shaft 247 is transmitted to the ball screw shaft 232, causing the ball screw shaft 232 to rotate with respect to the ball screw nut 231. The rotational motion is thereby converted into linear motion and causes the ball screw nut 231, the pressure plate 221, and the screw 214 to move forward. The movement of the screw 214 causes the melted resin stored in front of the screw 214 in the heating cylinder 211 to be injected from the injection nozzle 212 with a high pressure. The injected resin passes through the sprue bushing and the sprue, and fills the cavity formed between the stationary mold and the movable mold.

Steps of detaching and attaching the screw 214 of the injection apparatus 210 are described below.

After using the injection apparatus 210 over a long duration or when using a different type of resin, it is preferable to detach the screw 214 from the heating cylinder 211 for cleaning. To detach the screw 214, the joint part 223 is detached from the connecting shaft 222, and the speed reducer 253 and the metering motor 263 are detached from the pressure plate 221 by removing the fastening parts such as bolts fixing the speed reducer 253. Since the speed reducer 253 is attached to the rear side of the pressure plate 221, the speed reducer 253 and the metering motor 263 can be easily detached from the pressure plate 221. With the speed reducer 253 and the metering motor 263 detached, the screw 214 can be easily taken out from the rear end of the heating cylinder 211.

To attach the screw 214, the screw 214 is inserted into the heating cylinder 211 and the above steps are performed in the reverse order. When attaching the speed reducer 253 to the pressure plate 221, the axis of the screw 214 and the axis of the heating cylinder 211 can be aligned (center alignment) by adjusting the position of the speed reducer 253 in its width direction or in a direction perpendicular to the axis of the screw 214. After the center alignment, the fastening parts such as bolts for fixing the speed reducer 253 to the pressure plate 221 are fastened so that the speed reducer 253 is not able to move in its width direction, in other words, so that the position of the axis of the screw 214 does not change.

As described above, in this embodiment, the speed reducer 253 that functions as a metering driving part for rotating the screw 214 is fixed to the rear side of the pressure plate 221 by fastening parts. Therefore, the center alignment of the screw 214 can be performed without changing the position of the pressure plate 221 by just adjusting the position of the speed reducer 253 with respect to the pressure plate 221. In other words, such a structure makes it possible to align the axes of the heating cylinder 211 and the screw 214 even when the horizontal positional accuracy of the pressure plate 221 with respect to the heating cylinder 211 is low, and thereby makes it possible to improve the accuracy of assembling the heating cylinder 211 and the screw 214.

Also, since high horizontal positional accuracy of the pressure plate 221 with respect to the heating cylinder 211 is not necessary, high accuracy is also not necessary in processing and assembling the front flange part 216, the rear flange part 217, the guide rods 218, and the pressure plate 221. This, in turn, makes it possible to reduce the costs.

Also, since the speed reducer 253 is attached to the rear side of the pressure plate 221, the speed reducer 253 and the metering motor 263 can be easily detached from the pressure plate 221.

Further, according to this embodiment, the ball screw shaft 232 is coupled to the motor shaft 247 of the injection motor 233, which is used as a driving part for causing the screw 214 to move forward and backward in the heating cylinder 211, so as to be able to move in the axial direction; and the thrust load received by the ball screw shaft 232 is transmitted to the pressure receiving part of the load cell 234. Such a structure makes it possible to measure a thrust load received by the ball screw shaft 232 without the influence of the injection motor 233 and therefore makes it possible to accurately measure the thrust load indicating a back pressure.

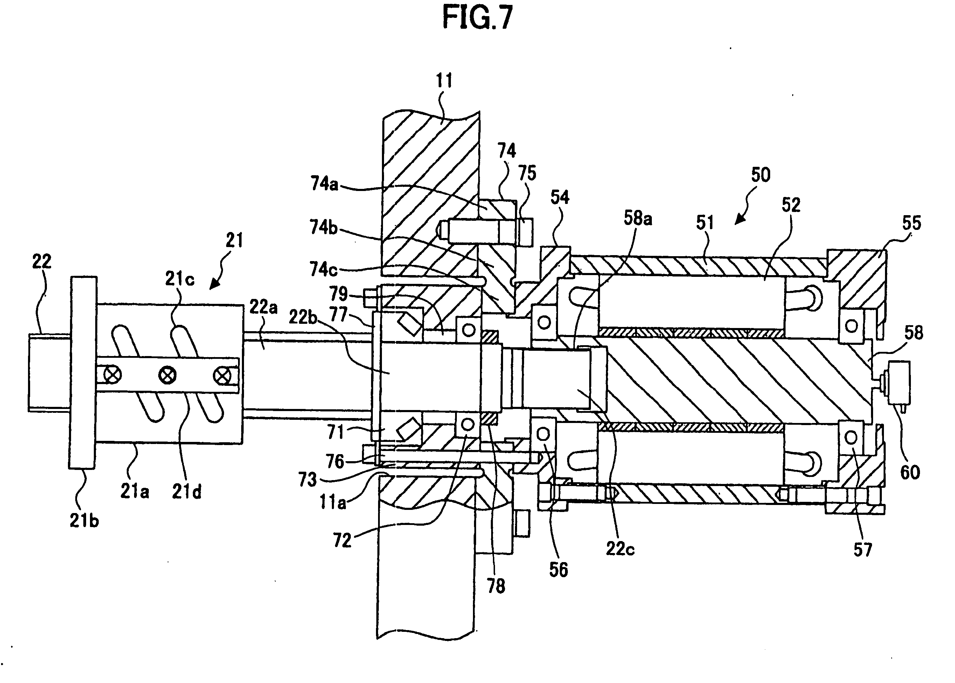

A third embodiment of the present invention is described below with reference to FIG. 7. FIG. 7 is a cross-sectional view of an injection drive unit of an exemplary injection apparatus according to the third embodiment of the present invention. The parts of the exemplary injection apparatus according to the third embodiment of the present invention other than the injection drive unit shown in FIG. 7 are substantially the same as those of the exemplary injection apparatus according to the first embodiment, and the descriptions of those parts are omitted here. Also, in FIG. 7, the same reference numbers are used for the parts corresponding to those shown in FIG. 3.

As shown in FIG. 7, a ball screw shaft 22 includes a screw part 22a, a bearing part 22b that is positioned closer to the injection motor 33 than the screw part 22a, and a connecting part 22c positioned closer to the injection motor 50 constituting an injection drive unit than the bearing part 22b. A helical ball screw groove is formed on the screw part 22a, a thrust bearing 71 and a bearing 72 are attached to the bearing part 22b, and spline grooves are formed along the axial direction on the connecting part 22c. A through hole 11a for putting through the ball screw shaft 22 is formed in a rear flange part (injection rear support) 11. A bearing holder 73 is inserted into the through hole 11a. The bearing holder 73 is a load transmission part as well as a rotation allowing support part that holds the bearing part 22b formed in the latter half of the ball screw shaft 22 in the through hole 11a so that the ball screw shaft 22 is able to rotate and is not able to move in the axial direction. The bearing holder 73 has a substantially cylindrical shape. The thrust bearing 71 used as a first bearing and the bearing 72 used as a second bearing are in the bearing holder 73, and hold the bearing part 22b passing through the bearing holder 73.

Steps are formed on the inner surface of the bearing holder 73 to hold the outer rings of the thrust bearing 71 and the bearing 72 and to receive a thrust load applied to the ball screw shaft 22. Also, a bearing press 77 shaped like a flange plate and used as a pressure applying part is attached to the front end of the bearing part 22b of the ball screw shaft 22; and a locknut 78 used as a pressure applying part is screwed onto the rear end of the bearing part 22b. The inner rings of the thrust bearing 71 and the bearing 72 are preloaded and held by the bearing press 77 and the locknut 78. With this structure, a thrust load applied to the ball screw shaft 22 is transmitted to the thrust bearing 71 and the bearing 72. The thrust bearing 71 used as the first bearing receives a thrust load that causes the ball screw shaft 22 to move backward, and the bearing 72 used as the second bearing receives a thrust load that causes the ball screw shaft 22 to move forward. The bearing holder 73 has a smooth cylindrical outer surface and is configured to be able to smoothly move in the axial direction relative to the through hole 11a. Thus, the bearing press 77, the thrust bearing 71, the bearing holder 73, and the fastening nut 78 form a load transmission mechanism. This load transmission mechanism also functions as a rotation allowing unit that rotatably supports the ball screw shaft 22 with respect to the injection rear support 11.

As an injection motor 50 that is an injection driving part, for example, a servomotor may be used. However, any motor may be used as long as its rotation angle, rotation speed, and rotation direction are controllable. The injection motor 50 includes a motor frame 51 having a substantially cylindrical shape, a front end plate 54, and a rear end plate 55. The front end plate 54 and the rear end plate 55 are fixed by fastening parts such as bolts to the front end side and the rear end side of the motor frame 51, respectively. A stator 52 made of a coil is fixed to the inner surface of the motor frame 51. A motor shaft 58 used as a drive rotation shaft is rotatably held in the injection motor 50 and a magnet 53 used as a rotor is attached onto the outer surface of the motor shaft 58 so as to face the stator 52. When an electric current is supplied to the stator 52, the motor shaft 58 with the magnet 53 rotates.

The motor shaft 58 is held by radial bearings 56 and 57 attached to the front end plate 54 and the rear end plate 55 so as to be able to rotate and not to be able to move in the axial direction. A rotation meter 60 such as a rotary encoder for measuring the rotational speed of the motor shaft 58 is attached to the rear end of the motor shaft 58. A recess used as a connecting part 58a is formed in the front end part of the motor shaft 58. Spline grooves are formed on the inner surface of the connecting part 58a along the axial direction. A connecting part 22c formed at the rear end of the ball screw shaft 22 is inserted into and thereby spline-coupled to the connecting part 58a. In other words, the ball screw shaft 22 is coupled to the motor shaft 57 so as not to be able to rotate and so as to be able to move in the axial direction. Any coupling technique may be used to couple the connecting part 22c of the ball screw shaft 22 and the connecting part 58a of the motor shaft 58 as long as the ball screw shaft 22 can be coupled to the motor shaft 58 so as not to be able to rotate and so as to be able to move in the axial direction. Although the connecting part 22c is spline-coupled to the connecting part 58a used as a rotation transmission part in this embodiment, a sliding key and a key groove formed along the axial direction may be used for the coupling.

The bearing holder 73 and the injection motor 50 are attached to the rear flange part 11 via the load cell 74 used as a load detector or a strain unit. The load cell 74 has a substantially toric shape and a fixing part 74a near the outer circumference of the load cell 74 is fixed by bolts 75 used as fastening parts to the rear side (the right hand side in FIG. 7) of the rear flange part 11. A pressure receiving part 74c near the inner circumference of the load cell 74 is sandwiched between and held by the bearing holder 73 and the front end plate 54 of the injection motor 50. Preferably, the bearing holder 73, the pressure receiving part 74c, and the front end plate 54 are integrally fastened by fastening parts such as bolts 76 that penetrate through these three parts. Thus, the injection motor 50 is attached via the load cell 74 to the rear flange part 11 so as to be able to move in the axial direction.

A fitting protrusion with a substantially cylindrical shape to be fitted into the opening of the load cell 74 is formed on the front side of the front plate 54 along its inner circumference. With the fitting protrusion fitted into the opening of the load cell 74, the axes of the front end plate 54 and the load cell 74 are aligned. Since the load cell 74 is attached to the rear flange part 11, the axes of the front end plate 54 and the rear flange part 11 are also aligned.

Meanwhile, a strain meter (not shown) such as a strain gauge is attached to a middle part 74b between the fixing part 74a and the pressure receiving part 74c of the load cell 74. The middle part 74b is thinner than other parts and is strained when a thrust load applied to the ball screw shaft 22 is transmitted by the bearing holder 73 to the pressure receiving part 74c. The size of the thrust load can be measured by measuring the amount of strain in the middle part 74b using a strain meter.

The ball screw nut 21 screwed onto the screw part 22a of the ball screw shaft 22 includes a body 21a shaped like a cylinder and a flange part 21b shaped like a disk. The flange part 21b is fixed by fastening parts such as bolts to the pressure plate 20. On the inner surface of the body 21a, a helical ball screw groove (not shown), which corresponds to the ball screw groove formed on the screw part 22a, is formed. The ball screw groove on the screw part 22a and the ball screw groove on the inner surface of the body 21a form a helical ball path in which multiple balls run consecutively. Return tubes 21c that connect one end of the ball path to the other end are attached by a clamp part 21d to the body 21a. The balls are circulated in the infinite loop path formed by the ball path and the return tubes 21c.

The ball screw nut 21 is fixed to the pressure plate 20 so as not to be able to rotate relative to the injection motor 50. Therefore, when the injection motor 50 is driven and the ball screw shaft 22 is rotated, the ball screw nut 21 is caused to move forward or backward. The direction (forward or backward) of the movement of the ball screw nut 21 is determined by the rotation direction of the ball screw shaft 22 and the direction of the ball screw grooves.

Next, the working of the injection apparatus 10 with the above configuration is described.

First, the working of the injection apparatus in a metering process is described. In a metering process, the screw 2 in the heating cylinder 1 is rotated to melt raw resin put into the heating cylinder 1 through the material input hole formed in the cooling jacket. A specific amount of the melted resin is stored in the front part of the screw 2.

More specifically, when a metering motor (not shown) is driven and the rotation shaft of the metering motor is rotated, the rotation is transmitted to the metering pulley 25 and causes the connecting shaft to rotate. The rotation of the connecting shaft is transmitted by the joint part 26 to the screw 2. The screw 2 rotates in the heating cylinder 11 and thereby melts and feeds forward the raw resin. The melted resin is stored in the front part of the screw 2.

In the metering process, a back pressure is generated as the resin is moved forward and the generated back pressure creates a thrust load that pushes back the screw 2. The thrust load is transmitted by the joint part 26, the connecting shaft, and the thrust bearing 28 to the pressure plate 20. Next, the thrust load is transmitted by the ball screw nut 21 attached to the pressure plate 20 to the ball screw shaft 22. Further, the thrust load is transmitted by the ball screw shaft 22, the pressure receiving part 77, the thrust bearing 71, the bearing holder 73 to the pressure receiving part 74c of the load cell 74. The transmitted thrust load strains the strain part 74b of the load cell 74. The thrust load indicating the amount of back pressure can be measured by measuring the amount of the strain with a strain meter.

The connecting part 22c of the ball screw shaft 22 is coupled to the connecting part 58a of the motor shaft 58 so as not to be able to rotate and so as to be able to move in the axial direction. With this structure, the thrust load is not transmitted to the motor shaft 57 and is therefore not transmitted to the injection motor 50. In other words, such a structure makes it possible to accurately measure a thrust load indicating the amount of back pressure by measuring the amount of strain of the strain part 74b of the load cell 74 without the influence of the injection motor 50. Also, the ball screw shaft 22 is coupled to the motor shaft 58 in a manner that allows the movement of the ball screw shaft 22 in the axial direction instead of using a conventional key coupling technique. Therefore, there is no possibility of a seize-up at a joint between the ball screw shaft 22 and the motor shaft 58.

Meanwhile, since the amount of back pressure influences the quality of molded products, it is necessary to control the amount of back pressure so that it becomes an appropriate level. The appropriate level of the back pressure changes depending on the type of the resin and molding conditions. Therefore, after measuring a thrust load indicating the amount of back pressure based on an output signal received from the strain meter, a control unit of the injection apparatus drives the injection motor 33 to cause the screw 14 to gradually move backward so that the thrust load or the back pressure becomes an appropriate level that is predetermined based on the type of resin and molding conditions. When the injection motor 50 is driven, the motor shaft 58 is rotated. The rotation of the motor shaft 58 is transmitted to the ball screw shaft 22, causing the ball screw shaft 22 to rotate with respect to the ball screw nut 21. The rotational motion is thereby converted into linear motion and causes the ball screw nut 21, the pressure plate 20, and the screw 2 to move backward.

In this embodiment, the injection motor 50 is configured to move when the load cell 74 is displaced. Therefore, the ripple of the injection motor 50 is not transmitted to the pressure receiving part 74c of the load cell 74 and does not affect the measurement of the thrust load. Such a structure makes it possible to accurately measure the thrust load indicating the amount of back pressure without the influence of the injection motor 50 even when it is being driven. In other words, such a structure makes it possible to accurately measure a back pressure and thereby to accurately control the amount of back pressure so that it becomes an appropriate level.

Next, the working of the injection apparatus of this embodiment in an injection process is described.

After a specific amount of melted resin is stored in the front part of the screw 2 in the metering process and the molding apparatus is clamped by a clamping apparatus (not shown), the injection apparatus is moved forward. Then, the front end of an injection nozzle attached to the heating cylinder 1 is caused to pass through a nozzle pass hole formed in a stationary platen and pressed tightly onto a sprue bushing provided on the back of a stationary mold. The injection motor 50 is driven to rotate the motor shaft 58. The rotation of the motor shaft 58 is transmitted to the ball screw shaft 22, causing the ball screw shaft 22 to rotate with respect to the ball screw nut 21. The rotational motion is thereby converted into linear motion and causes the ball screw nut 21, the pressure plate 20, and the screw 2 to move forward. The movement of the screw 2 causes the melted resin stored in front of the screw 2 in the heating cylinder 1 to be injected from the injection nozzle with a high pressure. The injected resin passes through the sprue bushing and the sprue, and fills the cavity formed between the stationary mold and the movable mold.

In this embodiment, the motor shaft 58 of the injection motor 50, which is a part of a drive unit for causing the screw 2 to move forward and backward in the heating cylinder 1, is moved via the load cell 74 along with the movement of the ball screw shaft 22 in the axial direction. Therefore, most of the thrust load received by the ball screw shaft 22 is transmitted to the pressure receiving part 34c of the load cell 74. Such a structure makes it possible to measure a thrust load received by the ball screw shaft 22 without the influence of the injection motor 50 and therefore makes it possible to accurately measure the thrust load indicating the amount of back pressure.

Also, the injection motor 50 is attached to the rear side of the rear flange part 11 and the motor shaft 58 is coupled to the connecting part 22c formed in the rear end part of the ball screw shaft 22 so as to be able to move in the axial direction. This structure makes it possible to easily attach and detach the injection motor 50 and thereby to easily replace or maintain the injection motor 50. Also, the load cell 74 is attached to the rear side of the rear flange part 11 and held between the bearing holder 73 and the front end plate 54 of the injection motor 50. This structure makes it possible to easily attach and detach the load cell 74 and thereby to easily replace or maintain the load cell 74.

Also, the pressure plate 20 is configured to be able to move forward and backward between the front flange part 10 and the rear flange part 11 along with the screw 2. This structure makes it possible to lengthen the forward and backward strokes of the screw 2. Further, the pressure plate 20 is configured to be able to move forward and backward along the guide rods 12 together with the screw 2. This structure makes it possible to reduce the vibration of the pressure plate 20 and the screw 2 during the forward and backward movement.

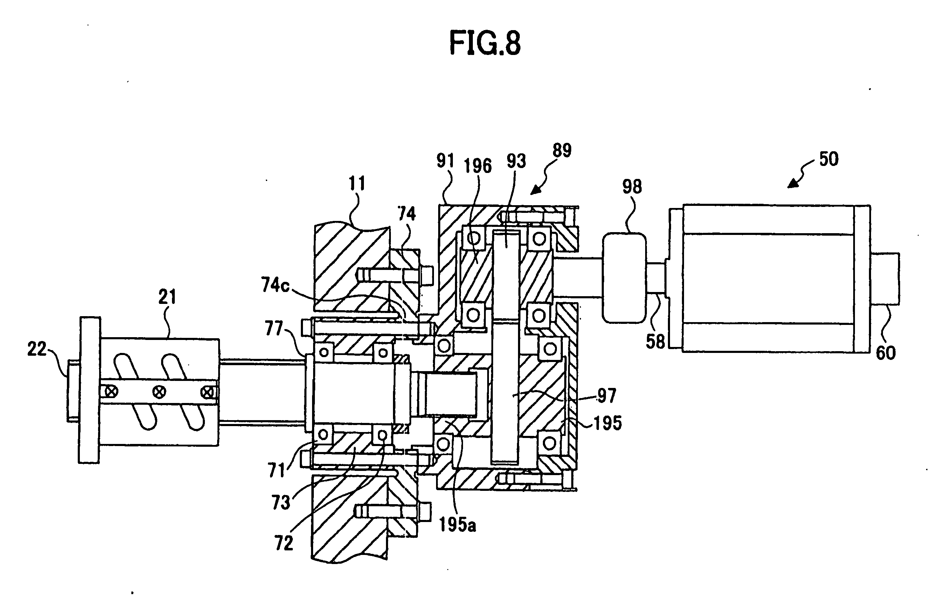

A variation of the injection apparatus according to the third embodiment of the present invention is described below with reference to FIG. 8. In FIG. 8, the same reference numbers are used for parts corresponding to those of the third embodiment and descriptions of those parts are omitted. Also, the descriptions of the working and features of the variation of the injection apparatus that are substantially the same as those of the third embodiment are omitted. FIG. 8 is a cross-sectional view of an injection drive unit of a variation of the injection apparatus according to the third embodiment of the present invention.

As shown in FIG. 8, a speed reducer 89 is provided between an injection motor 50 and a ball screw shaft 22. The speed reducer 89 reduces the speed of the rotation of a motor shaft 58 of the injection motor 50 and transmits the rotation to the ball screw shaft 22. The speed reducer 89 functions as a part of a drive unit. The speed reducer 89 includes a speed reducer frame 91. A driven gear shaft 195 and a drive gear shaft 196 are positioned in the speed reducer frame 91 in parallel with the motor shaft 58. The driven gear shaft 195 and the drive gear shaft 196 are held by radial bearings in the speed reducer frame 91 so as to be able to rotate and not to be able to move in the axial direction. A driven gear 97 having a larger diameter and attached to the driven gear shaft 195 and a drive gear 93 having a smaller diameter and attached to the drive gear shaft 196 engage each other and form a speed reducing mechanism.

The driven gear shaft 195 is an output shaft of the speed reducer 89 and functions as a drive rotation shaft of the drive unit. A recess used as a connecting part 195a is formed in the front end part of the driven gear shaft 195 and spline grooves are formed on the inner surface of the connecting part 195a along the axial direction. A connecting part 22c formed at the rear end of the ball screw shaft 22 is inserted into and thereby spline-coupled to the connecting part 195a. In other words, the ball screw shaft 22 is coupled to the driven gear shaft 195 so as not to be able to rotate and so as to be able to move in the axial direction. Any coupling technique may be used to couple the connecting part 22c of the ball screw shaft 22 and the connecting part 195a of the driven gear shaft 195 as long as the ball screw shaft 22 can be coupled to the driven gear shaft 195 so as not to be able to rotate and so as to be able to move in the axial direction. For example, a key and a key groove formed along the axial direction may be used for the coupling.

A bearing holder 73 and the speed reducer 89 are attached to a rear flange part 11 via a load cell 74 used as a load detector. A pressure receiving part 74c near the inner circumference of the load cell 74 is sandwiched between and held by the bearing holder 73 and the speed reducer frame 91. Preferably, the bearing holder 73, the pressure receiving part 74c, and the front end plate 91 are integrally fastened by fastening parts such as bolts that penetrate through these three parts.

A fitting protrusion with a substantially cylindrical shape to be inserted into the opening of the load cell 74 is formed on the front side of the speed reducer frame 91 along its inner circumference. With the fitting protrusion fitted into the opening of the load cell 74, the axes of the speed reducer frame 91 and the load cell 74 are aligned. Since the load cell 74 is attached to the rear flange part 11, the axes of the speed reducer frame 91 and the rear flange part 11 are also aligned.

The rear end part or a motor connecting part 58a of the drive gear shaft 196 protrudes backward from the speed reducer frame 91 and is coupled by a coupling 98 to the front end of the motor shaft 58 of the injection motor 50. The drive gear shaft 196 and the motor shaft 58 are coupled so as not to be able to rotate with respect to each other and not to be able to move in the axial direction. The injection motor 50 is attached to the speed reducer 89 by a fastening part that is not shown in the figure.

As described above, in the variation of the injection apparatus according to the third embodiment, the rotation of the motor shaft 58 of the injection motor 50 is transmitted to the ball screw shaft 22 after the rotational speed is reduced by the speed reducer 89. This structure makes it possible to move the screw 2 forward and backward even when the injection motor 50 is small and has a low power.

Also, in this embodiment, the driven gear shaft 195 of the speed reducer 89, which is a part of the drive unit for causing the screw 2 to move forward and backward in the heating cylinder 1, is coupled to the ball screw shaft 22 so as to be able to move in the axial direction. With this structure, the thrust load received by the ball screw shaft 22 is transmitted by the pressure receiving part 74c of the load cell 74. In other words, such a structure makes it possible to measure a thrust load received by the ball screw shaft 22 without the influence of the injection motor 50 and the speed reducer 89, and therefore makes it possible to accurately measure the thrust load indicating the amount of back pressure.

Also, the speed reducer 89 is attached to the rear side of the rear flange part 11 and the driven gear shaft 195 is coupled to the connecting part 22c formed in the rear end part of the ball screw shaft 22 so as to be able to move in the axial direction. This structure makes it possible to easily attach and detach the speed reducer 89 and thereby to easily replace or maintain the speed reducer 89. Further, the load cell 74 is attached to the rear side of the rear flange part 11 and held between the bearing holder 73 and the speed reducer frame 89. This structure makes it possible to easily attach and detach the load cell 74 and thereby to easily replace or maintain the load cell 74.

The present invention is not limited to the specifically disclosed embodiments, and variations and modifications may be made without departing from the scope of the present invention as defined by the appended claims.

### INDUSTRIAL APPLICABILITY

The present invention is applicable to an injection apparatus that pressurizes and thereby injects resin by using an injection part such as a screw.

## Claims

1. An injection apparatus, comprising:
an injection drive unit (50) configured to generate rotational motion;
a motion conversion mechanism (21, 22) configured to convert the rotational motion generated by the injection drive unit (50) into linear motion, the motion conversion mechanism (21, 22) including a ball screw shaft (22) to be rotated by the rotational motion generated by the injection drive unit and a ball screw nut (21) to be moved forward and backward by the rotational motion of the ball screw shaft (22);
an injection part (2) configured to be moved forward and backward by the linear motion of the motion conversion mechanism (21, 22) and to inject melted resins; and
a strain unit (74) configured to be strained by a load applied to the injection part (2) as a reaction force of the melted resin;
**characterized by**:
a rotation allowing unit (71, 73, 77, 78) disposed between the strain unit (74) and the ball screw shaft (22) and configured to rotatably support the ball screw shaft (22); and
a movement allowing part (59) disposed between the injection drive unit (50) and the ball screw shaft (22) and configured to allow the ball screw shaft (22) to move when the strain unit (74) is strained by the load.

2. The injection apparatus as claimed in claim 1, wherein the movement allowing part (59) is a rotation transmission part (59) configured to transmit the rotational motion generated by the injection drive unit (50) to the motion conversion mechanism (21, 22).

3. The injection apparatus as claimed in claim 1 or 2, wherein the injection drive unit (50) is attached to a stationary support part (11) with respect to which the injection part (2) moves forward and backward.

4. The injection apparatus as claimed in claim 2, wherein the rotation transmission part (59) is included in the injection drive unit (50).

5. The injection apparatus as claimed in claim 2 or 4, wherein the rotation transmission part (59) has a spline structure.

6. The injection apparatus as claimed in claim 2, wherein a speed reducer (89) is provided between the rotation transmission part (59) and the injection drive unit (90).

7. The injection apparatus as claimed in any one of claims 1 through 6, wherein the strain unit (74) is attached to a stationary support part (11) with respect to which the injection part (2) moves forward and backward.

## Patentansprüche

1. Einspritzvorrichtung, die Folgendes aufweist:
eine Einspritzantriebseinheit (50), die so konfiguriert ist, dass sie eine Drehbewegung erzeugt;
einen Bewegungsumwandlungsmechanismus (21, 22), der so konfiguriert ist, dass er die Drehbewegung, die durch die Einspritzantriebseinheit (50) erzeugt wird, in eine lineare Bewegung umwandelt, wobei der Bewegungsumwandlungsmechanismus (21, 22) eine Kugelumlaufspindelwelle (22) aufweist, die durch die Drehbewegung gedreht wird, die durch die Einspritzantriebseinheit erzeugt wird, sowie eine Kugelumlaufspindelmutter (21), die durch die Drehbewegung der Kugelumlaufspindelwelle (22) vorwärts und rückwärts bewegt wird;
einen Einspritzteil (2), der so konfiguriert ist, dass er durch die lineare Bewegung des Bewegungsumwandlungsmechanismus (21, 22) vorwärts und rückwärts bewegt wird und die geschmolzenen Harze einspritzt; und
eine Dehnungseinheit (74), die so konfiguriert ist, dass sie durch eine Last gedehnt wird, die durch den Einspritzteil (2) als eine Reaktionskraft des geschmolzenen Harzes angewendet wird;
**dadurch gekennzeichnet, dass**:
eine Rotationsermöglichungseinheit (71, 73, 77, 78) zwischen der Dehnungseinheit (74) und der Kugelumlaufspindelwelle (22) angeordnet ist und so konfiguriert ist, dass sie die Kugelumlaufspindelwelle (22) in drehbarer Weise trägt bzw. lagert; und
einen Bewegungsermöglichungsteil (59), der zwischen der Einspritzantriebseinheit (50) und der Kugelumlaufspindelwelle (22) angeordnet ist und so konfiguriert ist, dass er die Bewegung ermöglicht, wenn die Dehnungseinheit (74) durch die Last gedehnt wird.

2. Einspritzvorrichtung gemäß Anspruch 1, wobei der Bewegungsermöglichungsteil (59) ein Rotationsübertragungsteil (59) ist, der so konfiguriert ist, dass er die Drehbewegung, die durch den Einspritzantriebsteil (50) erzeugt wird, auf den Bewegungsumwandlungsmechanismus (21, 22) überträgt.

3. Einspritzvorrichtung gemäß Anspruch 1 oder 2, wobei die Einspritzantriebseinheit (50) an einem stationären Halterungsteil (11) angebracht ist, wobei sich der Einspritzteil (2) in Bezug auf diesen vorwärts und rückwärts bewegt.

4. Einspritzvorrichtung gemäß Anspruch 2, wobei der Rotationsübertragungsteil (59) in der Einspritzantriebseinheit (50) enthalten ist.

5. Einspritzvorrichtung gemäß Anspruch 2 oder 4, wobei der Rotationsübertragungsteil (59) einen Keilaufbau besitzt.

6. Einspritzvorrichtung gemäß Anspruch 2, wobei eine Drehzahluntersetzungsvorrichtung (89) zwischen dem Rotationsübertragungsteil (59) und der Einspritzantriebseinheit (90) vorgesehen ist.

7. Einspritzvorrichtung gemäß einem der Ansprüche 1 bis 6, wobei die Dehnungseinheit (74) an einem stationären Halterungsteil (11) angebracht ist, wobei sich der Einspritzteil (2) in Bezug auf diesen vorwärts und rückwärts bewegt.

## Revendications

1. Dispositif d'injection comprenant :
un module d'entraînement d'injection (50) agencé pour générer un mouvement rotatif ;
un mécanisme de conversion de mouvement (21, 22) agencé pour convertir le mouvement rotatif généré par le module d'entraînement d'injection (50) en un mouvement linéaire, le mécanisme de conversion de mouvement (21, 22) comprenant un arbre de vis à bille (22), destiné à être entraîné en rotation par le mouvement rotatif généré par le module d'entraînement d'injection, et un écrou de vis à bille (21) destiné à être entraîné en avant et en arrière par le mouvement rotatif de l'arbre de vis à bille (22) ;
une pièce d'injection (2) agencée pour être déplacée en avant et en arrière par le mouvement linéaire du mécanisme de conversion de mouvement (21, 22) et pour injecter de la résine fondue ; et
un module d'effort (74) agencé pour être mis en tension par une charge appliquée à la pièce d'injection (2) en tant que force de réaction de la résine fondue ;
**caractérisé par** :
un module permettant une rotation (71, 73, 77, 78) disposé entre le module d'effort (74) et l'arbre de vis à bille (22) et agencé pour supporter en rotation l'arbre de vis à bille (22) ; et
une pièce permettant un mouvement (59) disposée entre le module d'entraînement d'injection (50) et l'arbre de vis à bille (22) et agencée pour permettre à l'arbre de vis à bille (22) de se déplacer lorsque le module d'effort (74) est mis en tension par la charge.

2. Dispositif d'injection selon la revendication 1, dans lequel la pièce permettant un mouvement (59) est une pièce de transmission de rotation (59) agencée pour transmettre le mouvement rotatif généré par le module d'entraînement d'injection (50) au mécanisme de conversion de mouvement (21, 22).

3. Dispositif d'injection selon la revendication 1 ou 2, dans lequel le module d'entraînement d'injection (50) est fixé à une pièce support fixe (11) par rapport à laquelle la pièce d'injection (2) se déplace en avant et en arrière.

4. Dispositif d'injection selon la revendication 2, dans lequel la pièce de transmission de rotation (59) est incluse dans le module d'entraînement d'injection (50).

5. Dispositif d'injection selon la revendication 2 ou 4, dans lequel la pièce de transmission de rotation (59) a une structure cannelée.

6. Dispositif d'injection selon la revendication 2, dans lequel un réducteur de vitesse (89) est prévu entre la pièce de transmission de rotation (59) et le module d'entraînement d'injection (90).

7. Dispositif d'injection selon l'une quelconque des revendications 1 à 6, dans lequel le module d'effort (74) est fixé à une pièce support fixe (11) par rapport à laquelle la pièce d'injection (2) se déplace en avant et en arrière.
